# EUROPEAN PATENT APPLICATION

(11) **EP 1 701 184 A1**
(43) Date of publication of application: **13.09.2006**
(21) Application number: 04807541.0
(22) Date of filing: 22.12.2004
(51) Int. Cl.: G02B 5/30, G02B 1/11, B32B 7/02, B32B 9/00, G02F 1/1335

(54) **POLARIZING PLATE PROTECTIVE FILM, POLARIZING PLATE WITH REFLECTION PREVENTING FUNCTION AND OPTICAL PRODUCT**

(30) Priority: 26.12.2003 JP 2003435074
(71) Applicant: ZEON CORPORATION, Chiyoda-ku Tokyo 100-8323 (JP)
(72) Inventor: OKUDE, Syuhei c/o ZEON CORPORATION, Chiyoda-ku Tokyo 1008323 (JP); TOYOSHIMA, Tetsuya c/o ZEON CORPORATION, Chiyoda-ku Tokyo 1008323 (JP); ARAKAWA, Kohei c/o ZEON CORPORATION, Chiyoda-ku Tokyo 1008323 (JP)
(74) Representative: Vossius & Partner
(86) International application number: PCT/JP2004/019184
(87) International publication number: WO 2005/064367

(57) **Abstract**

A polarizing plate protective film including a base film and a low-refractive-index layer formed on the base film, the low-refractive-index layer including a metal oxide complex and inorganic microparticles and having a refractive index of 1.25 to 1.37, the metal oxide complex being formed from a compound shown by the following formula (1): MXₙ (wherein M represents a metal atom or a semimetal atom, X represents an alkoxy group or the like, and n represents the valence of M) or a partial hydrolysate or a complete hydrolysate of the compound shown by the formula (1), and having an -(O-M)ₘ-O- bond (wherein M is the same as defined above, and m represents a positive integer) in the molecule; a reflection preventive polarizing plate using the polarizing plate protective film, and an optical product including the reflection preventive polarizing plate. According to the present invention, a polarizing plate protective film including a low-refractive-index layer exhibiting antireflection effects, exhibiting sufficient scratch resistance as a protective film for a polarizing plate, and showing only a small amount of warping when bonded to a polarizing plate, a reflection preventive polarizing plate, and an optical product can be provided.

## Description

### TECHNICAL FIELD

The present invention relates to a polarizing plate protective film, a reflection preventive polarizing plate, and an optical product including the reflection preventive polarizing plate.

### BACKGROUND ART

In a display such as a liquid crystal display, a low-refractive-index layer may be formed on a transparent substrate (base film) using a low-refractive-index material in order to prevent deterioration of visibility due to surface reflection.

As the low-refractive-index material, inorganic materials such as MgF₂ and SiO₂, organic materials such as a perfluoro resin, and the like have been known. In order to obtain excellent antireflection properties, it is preferable that the difference in refractive index between a layer having a high refractive index (high-refractive-index layer) and the low-refractive-index layer become larger so that the minimum reflectance is decreased. However, since the difference in refractive index between the base film and the low-refractive-index material is small, it is necessary to form a multilayer film on the surface of the base film by stacking a layer formed of a material with a higher refractive index and the low-refractive-index layer.

In recent years, a method of forming a low-refractive-index layer using hollow silica microparticles having a low refractive index has been proposed. For example, JP-A-2001-233611 discloses a method of forming a low-refractive-index transparent coating by applying and drying a coating composition prepared by dispersing hollow silica microparticles in a matrix forming material. JP-A-2003-201443 discloses a method of forming a transparent coating in which a low-refractive-index porous matrix is formed by applying and drying a coating composition prepared by dispersing hollow silica microparticles in a matrix forming material. According to the above methods, excellent antireflection properties can be obtained without stacking a high-refractive-index layer and a low-refractive-index layer.

In the methods disclosed in the above documents, a matrix containing hollow silica microparticles is formed. However, since the resulting matrix exhibits low strength and poor cohesive force, scratch resistance sufficient for a polarizing plate protective film for a liquid crystal display device or the like may not be obtained. A high dimensional stability is required when bonding a protective film to a polarizing plate and incorporating the resulting laminate into a liquid crystal display device. However, a protective film obtained by the above methods may be warped (deformed).

The present invention was achieved in view of the above-described situation of the related art. An object of the invention is to provide a polarizing plate protective film including a low-refractive-index layer effective as an antireflection layer, exhibiting scratch resistance sufficient for a protective film for a polarizing plate, and showing only a small amount of warping (deformation) which may cause a problem when bonding the protective film to a polarizing plate, and a reflection preventive polarizing plate. Another object of the present invention is to provide an optical product using the reflection preventive polarizing plate according to the present invention.

### DISCLOSURE OF THE INVENTION

The inventors of the present invention conducted extensive studies in order to achieve the above objects. As a result, the inventors have found that a polarizing plate protective film including a transparent base film and a low-refractive-index layer which includes a metal oxide complex formed from a specific metal compound or a complete or partial hydrolysate of the metal compound and inorganic microparticles and has a refractive index adjusted in a specific range exhibits an excellent antireflection function and excellent scratch resistance. The inventors have also found that a polarizing plate protective film which shows only a small amount of warping (deformation) may cause a problem when bonding the protective film to a polarizing plate by using a base film formed of an alicyclic structure-containing polymer resin. These findings have led to the completion of the present invention.

According to a first aspect of the present invention, a polarizing plate protective film described in (1) to (8) below is provided.
(1) A polarizing plate protective film comprising a base film and a low-refractive-index layer formed on the base film, the low-refractive-index layer including a metal oxide complex and inorganic microparticles and having a refractive index of 1.25 to 1.37, the metal oxide complex being formed from at least one compound selected from the group consisting of a compound shown by the following formula (1): MXₙ (wherein M represents a metal atom or a semimetal atom, X represents a halogen atom, a monovalent hydrocarbon group which may have a substituent, an oxygen atom, an organic acid radical, a β-diketonate group, an inorganic acid radical, an alkoxy group, or a hydroxyl group, and n represents the valence of M, provided that, when n is 2 or more, the Xs may be the same or different), a partial hydrolysate of at least one compound shown by the formula (1), and a complete hydrolysate of at least one compound shown by the formula (1), and having an -(O-M)ₘ-O- bond (wherein M is the same as defined above, and m represents a positive integer) in the molecule.
(2) The polarizing plate protective film according to (1), wherein the inorganic microparticle is a hollow microparticle of an inorganic compound.

(3) The polarizing plate protective film according to (1) or (2), wherein M is Si.
(4) The polarizing plate protective film according to any of (1) to (3), comprising a hard coating layer between the base film and the low-refractive-index layer.

(5) The polarizing plate protective film according to (4), wherein the hard coating layer includes an activated energy ray-curable resin or a heat-curable resin.
(6) The polarizing plate protective film according to (4), wherein the hard coating layer has a refractive index of 1.53 or more.
(7) The polarizing plate protective film according to (4), wherein the hard coating layer further includes conductive microparticles.
(8) The polarizing plate protective film according to any of (1) to (7), wherein the base film includes an alicyclic structure-containing polymer resin.

According to a second aspect of the present invention, a reflection preventive polarizing plate described in (9) below is provided.
(9) A reflection preventive polarizing plate comprising the polarizing plate protective film according to the present invention as an observation-side protective film for the polarizing plate.
   According to a third aspect of the present invention, an optical product described in (10) below is provided.
(10) An optical product comprising the reflection preventive polarizing plate according to the present invention.

### BRIEF DESCRIPTION OF THE DRAWINGS

FIG. 1 is a view showing a method of measuring the warping rate of a synthetic resin which forms a base film.
FIG. 2 is a cross-sectional view of a layer configuration of a polarizing plate protective film according to the present invention.
FIG. 3 is a cross-sectional view of a layer configuration of a reflection preventive polarizing plate according to the present invention.
FIG. 4 is a cross-sectional view of a layer configuration in which a reflection preventive polarizing plate according to the present invention is bonded to a liquid crystal display cell.
FIG. 5 is a cross-sectional view of a layer configuration of the liquid crystal display cell shown in FIG. 4.

### BEST MODE FOR CARRYING OUT THE INVENTION

The present invention is described below in detail in the order of 1) a polarizing plate protective film, 2) a reflection preventive polarizing plate, and 3) an optical product.

### 1) Polarizing plate protective film

The polarizing plate protective film according to the present invention includes a base film and a low-refractive-index layer formed on the base film.

### (Base film)

The base film used in the present invention is not particularly limited insofar as the base film is formed of a synthetic resin exhibiting excellent transparency. It is preferable that the base film be formed of a synthetic resin exhibiting a total light transmittance of 80% or more at a thickness of 1 mm. As examples of the synthetic resin which forms the base film, an alicyclic structure-containing polymer resin, polycarbonate resin, polyester resin, polysulfone resin, polyethersulfone resin, polystyrene resin, linear polyolefin resin, polyvinyl alcohol resin, cellulose acetate resin, polyvinyl chloride resin, polymethacrylate resin, and the like can be given.

Of these, the alicyclic structure-containing polymer resin or the cellulose acetate resin such as triacetyl cellulose is preferable due to low birefringence. It is particularly preferable to use one or more types of alicyclic structure-containing polymer resins from the viewpoint of transparency, low hygroscopicity, dimensional stability, light weight, and the like.

The alicyclic structure-containing polymer resin includes an alicyclic structure in the repeating unit of the polymer resin. As the alicyclic structure-containing polymer resin, a polymer resin including an alicyclic structure in the main chain or a polymer resin including an alicyclic structure in the side chain may be used.

As examples of the alicyclic structure, a cycloalkane structure, a cycloalkene structure, and the like can be given. Of these, the cycloalkane structure is preferable from the viewpoint of thermal stability and the like. The number of carbon atoms of the alicyclic structure is not particularly limited. The number of carbon atoms is usually 4 to 30, preferably 5 to 20, and still more preferably 5 to 15. If the number of carbon atoms of the alicyclic structure is within this range, a base film exhibiting excellent heat resistance and flexibility can be obtained.

The content of the repeating unit including the alicyclic structure in the alicyclic structure-containing polymer resin may be arbitrarily selected depending on the purpose of use. The content is usually 50 wt% or more, preferably 70 wt% or more, and still more preferably 90 wt% or more. If the content of the repeating unit including the alicyclic structure is too low, heat resistance may be decreased. A repeating unit other than the repeating unit including the alicyclic structure in the alicyclic structure-containing polymer resin is arbitrarily selected depending on the purpose of use.

As specific examples of the alicyclic structure-containing polymer resin, (i) a norbornene polymer, (ii) a monocyclic olefin polymer, (iii) a cyclic conjugated diene polymer, (iv) a vinyl alicyclic hydrocarbon polymer, hydrogenated products of these polymers, and the like can be given. Of these, the norbornene polymer is preferable from the viewpoint of transparency and moldability.

As specific examples of the norbomene polymer, a ring-opening polymer of norbomene monomers, a ring-opening copolymer of a norbomene monomer and a monomer copolymerizable with the norbomene monomer, hydrogenated products of these polymers, an addition polymer of norbomene monomers, an addition copolymer of a norbornene monomer and a monomer copolymerizable with the norbornene monomer, and the like can be given. Of these, the hydrogenated product of the ring-opening (co)polymer of norbomene monomers is preferable from the viewpoint of transparency.

As examples of the norbomene monomer, bicyclo [2.2.1] hepta-2-ene (common name: norbornene), tricyclo [4.3.0.1^{2,5}] deca-3,7-diene (common name: dicyclopentadiene), 7,8-benzotricyclo [4.3.0.1^{2,5}] deca-3-ene (common name: methanotetrahydrofluorene), tetracyclo [4.4.0.1^{2,5}.1^{7,10}] dodeca-3-ene (common name: tetracyclododecene), derivatives (derivative including a substituent on the ring, for example) of these compounds, and the like can be given. As examples of the substituent, an alkyl group, an alkylene group, an alkoxycarbonyl group, a carboxyl group, and the like can be given. The same or different substituents may be bonded to the ring at the same time. The norbomene monomers may be used either individually or in combination of two or more.

As examples of the monomer which is ring-opening copolymerizable with the norbomene monomer, monocyclic olefins such as cyclohexene, cycloheptene, and cyclooctene, and derivatives thereof; cyclic conjugated dienes such as cyclohexadiene and cycloheptadiene, and derivatives thereof; and the like can be given.

The ring-opening polymer of the norbomene monomers and the ring-opening copolymer of the norbomene monomer and the monomer copolymerizable with the norbornene monomer may be obtained by polymerizing the monomers in the presence of a ring-opening polymerization catalyst.
As the ring-opening polymerization catalyst, a known ring-opening polymerization catalyst may be used.

As examples of the monomer which is addition copolymerizable with the norbomene monomer, α-olefins having 2 to 20 carbon atoms such as ethylene and propylene, and derivatives thereof; cycloolefins such as cyclobutene and cyclopentene, and derivatives thereof; nonconjugated dienes such as 1,4-hexadiene; and the like can be given. These monomers may be used either individually or in combination of two or more. Of these, the α-olefins are preferable, with ethylene being still more preferable.

The addition polymer of the norbornene monomers and the addition copolymer of the norbomene monomer and the monomer copolymerizable with the norbomene monomer may be obtained by polymerizing the monomers in the presence of an addition polymerization catalyst. As the addition polymerization catalyst, a known addition polymerization catalyst may be used.

The hydrogenated products of the ring-opening polymer of the norbornene monomers, the ring-opening copolymer of the norbornene monomer and the monomer copolymerizable with the norbornene monomer, the addition polymer of the norbornene monomers, and the addition polymer of the norbomene monomer and the monomer copolymerizable with the norbornene monomer may be obtained by adding a known hydrogenation catalyst to the unhydrogenated polymer and hydrogenating the carbon-carbon unsaturated bonds in an amount of preferably 90% or more.

As examples of the monocyclic olefin polymer, addition polymers of cyclohexene, cycloheptene, and cyclooctene, and the like can be given.
As examples of the cyclic conjugated diene polymer, 1,2-addition or 1,4-addition polymers of cyclic conjugated diene monomers such as cyclopentadiene and cyclohexadiene, and the like can be given.

The vinyl alicyclic hydrocarbon polymer is a polymer including a repeating unit derived from a vinylcycloalkane or vinylcycloalkene. As examples of the vinyl alicyclic hydrocarbon polymer, polymers of vinyl alicyclic hydrocarbon compounds such as a vinylcycloalkane such as vinylcyclohexane and a vinylcycloalkene such as vinylcyclohexene, and hydrogenated products thereof; aromatic-portion hydrogenated products of polymers of vinyl aromatic hydrocarbon compounds such as styrene and α-methylstyrene; and the like can be given.

The vinyl alicyclic hydrocarbon polymer may be a hydrogenated product of a copolymer such as a random copolymer or a block copolymer of a vinyl alicyclic hydrocarbon compound or a vinyl aromatic hydrocarbon compound and a monomer copolymerizable with these monomers. As examples of the block copolymerization, diblock, triblock, or higher multiblock copolymerization, gradient block copolymerization, and the like can be given. Note that the block copolymerization is not particularly limited.

The molecular weight of the synthetic resin is usually 10,000 to 300,000, preferably 15,000 to 250,000, and still more preferably 20,000 to 200,000 as a polyisoprene-reduced or polystyrene-reduced weight average molecular weight measured by gel permeation chromatography using cyclohexane (or toluene when the polymer resin is not dissolved in cyclohexane) as a solvent. In this case, the mechanical strength and the moldability of the resulting base film are well balanced.

The glass transition temperature of the synthetic resin may be arbitrarily selected depending on the purpose of use. The glass transition temperature is preferably 80°C or more, and still more preferably 100 to 250°C. A base film including a synthetic resin of which the glass transition temperature is within the above range does not undergo deformation and stress during use at a high temperature and a high humidity and exhibits excellent durability.

The molecular weight distribution (weight average molecular weight (Mw) / number average molecular weight (Mn)) of the synthetic resin is not particularly limited, but is usually 1 to 10, preferably 1 to 6, and still more preferably 1.1 to 4. The mechanical strength and the moldability of the base film are well balanced by adjusting the molecular weight distribution in the above range.

The base film used in the present invention may be obtained by molding the synthetic resin in the shape of a film using a known molding method.
As examples of the method of molding the synthetic resin in the shape of a film, a solution casting method and a melt extrusion molding method can be given. In particular, the melt extrusion molding method is preferable since the volatile content in the film and thickness nonuniformity can be reduced. As examples of the melt extrusion molding method, a method using a die such as a T-shaped die, an inflation method, and the like can be given. Of these, the method using a T-shaped die is preferable due to excellent productivity and thickness accuracy.

When using the method utilizing a T-shaped die as the method of molding a film, the synthetic resin is melted in an extruder having a T-shaped die at a temperature preferably 80 to 180°C, and still more preferably 100 to 150°C higher than the glass transition temperature of the synthetic resin. If the synthetic resin is melted in an extruder at too low a temperature, the flowability of the synthetic resin may be insufficient. If the synthetic resin is melted in an extruder at too high a temperature, the synthetic resin may deteriorate. It is preferable to predry the synthetic resin before molding the synthetic resin in the shape of a film. The synthetic resin is predried by drying the raw material in the form of pellets using a hot air dryer, for example. The drying temperature is preferably 100°C or more, and the drying time is preferably two hours or more. The volatile content in the film can be reduced by predrying. Moreover, the extruded synthetic resin can be prevented from foaming.

The base film preferably has a saturated water absorption of 0.05 wt% or less, still more preferably 0.01 wt% or less, and particularly preferably 0.007 wt% or less. The adhesion with the low-refractive-index layer is increased by using a base film having a saturated water absorption in the above range, whereby separation of the low-refractive-index layer does not occur even when used for a long time.

The base film may be provided with a surface modification treatment on at least one side. The adhesion of the base film with the low-refractive-index layer or another layer described later can be improved by providing the base film with the surface modification treatment. As examples of the surface modification treatment, an energy ray treatment, chemical treatment, and the like can be given.

As examples of the energy ray treatment, a corona discharge treatment, plasma treatment, electron beam treatment, ultraviolet ray treatment, and the like can be given. Of these, the corona discharge treatment and the plasma treatment are preferable in view of treatment efficiency and the like. Note that it is particularly preferable to use the corona discharge treatment. As the chemical treatment, the base film may be immersed in an oxidizing agent aqueous solution such as a potassium dichromate solution or concentrated sulfuric acid, and then sufficiently washed with water. It is effective to shake the container in the state in which the base film is immersed in the oxidizing agent aqueous solution. Note that the surface of the base film may be dissolved or the transparency of the base film may be decreased when the base film is treated for a long time. Therefore, it is necessary to adjust the treatment time and the like corresponding to the reactivity, concentration, and the like of the chemical used.

The thickness of the base film is usually 10 to 1000 µm. The thickness of the base film is preferably 30 to 300 µm, and still more preferably 40 to 200 µm from the viewpoint of transparency and mechanical strength.

In the polarizing plate protective film according to the present invention, another layer may be provided between the base film and the low-refractive-index layer. As examples of such a layer, a hard coating layer and a primer layer can be given. It is preferable to provide the hard coating layer. A polarizing plate protective film with more excellent surface hardness can be obtained by providing the hard coating layer.

The hard coating layer is formed to increase the surface hardness, cycle fatigue resistance, and scratch resistance of the base film. The material for the hard coating layer is not particularly limited insofar as the material exhibits a hardness of "HB" or more in a pencil hardness test specified in JIS K5600-5-4. It is preferable that the hard coating layer include a heat-curable resin or an activated energy ray-curable resin (preferably an activated energy ray-curable resin) due to excellent productivity, adhesion, transparency, and mechanical strength.

As examples of the heat-curable resin, a phenol resin, urea resin, diallyl phthalate resin, melamine resin, guanamine resin, unsaturated polyester resin, polyurethane resin, epoxy resin, aminoalkyd resin, melamine-urea cocondensation resin, silicone resin, polysiloxane resin, and the like can be given. In particular, the melamine resin, epoxy resin, silicone resin, and polysiloxane resin are preferable due to excellent surface hardness, cycle fatigue resistance, and scratch resistance.
The above resin may contain a crosslinking agent, curing agent such as an initiator, polymerization promoter, solvent, viscosity controller, and the like, as required.

The activated energy ray-curable resin is a resin obtained by curing a prepolymer, oligomer, and/or monomer containing a polymerizable unsaturated bond or an epoxy group in the molecule by applying energy rays. The term "activated energy rays" used herein refers to electromagnetic waves or charged particle rays having an energy quantum which can cause molecules to be polymerized or crosslinked. As the activated energy rays, ultraviolet rays or electron beams are usually used.

As examples of the prepolymer and oligomer containing a polymerizable unsaturated bond or an epoxy group in the molecule, unsaturated polyesters such as a condensate of an unsaturated dicarboxylic acid and a polyhydric alcohol, methacrylates such as polyester methacrylate, polyether methacrylate, polyol methacrylate, and melamine methacrylate, acrylates such as polyester acrylate, epoxy acrylate, urethane acrylate, polyether acrylate, polyol acrylate, and melamine acrylate, and cationically polymerizable epoxy compounds can be given.

As examples of the monomer containing a polymerizable unsaturated bond or an epoxy group in the molecule, styrene monomers such as styrene and α-methylstyrene; acrylates such as methyl acrylate, ethyl acrylate, 2-ethylhexyl acrylate, and methoxyethyl acrylate; methacrylates such as methyl methacrylate, ethyl methacrylate, and propyl methacrylate; unsaturated substituted amino alcohol esters such as 2-(N,N-diethylamino)ethyl acrylate, 2-(N,N-dimethylamino)ethyl acrylate, and 2-(N,N-dibenzylamino)methyl acrylate; unsaturated carboxylic acid amides such as acrylamide and methacrylamide; polyfunctional acrylates such as ethylene glycol diacrylate, propylene glycol diacrylate, neopentyl glycol diacrylate, 1,6-hexanediol diacrylate, trimethylolpropane triacrylate, pentaerythritol triacylate, pentaerythritol tetraacrylate, and dipentaerythritol hexaacrylate; polythiols containing two or more thiol groups in the molecule such as trimethylolpropane trithioglycolate, trimethylolpropane trithiopropylate, and pentaerythritol tetrathioglycolate; and the like can be given. In the present invention, the prepolymer, oligomer, and/or monomer containing a polymerizable unsaturated bond or an epoxy group in the molecule may be used either individually or in combination of two or more.

In the polarizing plate protective film according to the present invention, it is preferable that the hard coating layer include conductive microparticles in addition to the activated energy ray-curable resin or the heat-curable resin. A hard coating layer having the function of an antistatic film and exhibiting excellent mechanical strength and a high refractive index can be formed by adding the conductive microparticles to the activated energy ray-curable resin or the heat-curable resin.

The conductive microparticles are not particularly limited. It is preferable to use metal oxide microparticles due to excellent transparency.

As examples of the metal oxide microparticles, antimony pentoxide, phosphorus-doped tin oxide (PTO), tin oxide, antimony-doped tin oxide (ATO), fluorine-doped tin oxide (FTO), tin-doped indium oxide (ITO), zinc-doped indium oxide (IZO), aluminum-doped zinc oxide (AZO), zinc oxide/aluminum oxide, zinc antimonate, and the like can be given. These metal oxides may be used either individually or in combination of two or more. In particular, it is preferable to use antimony pentoxide and/or phosphorus-doped tin oxide due to excellent transparency and the like.

In the present invention, conductive metal oxide microparticles obtained by coating metal oxide microparticles which do not exhibit conductivity with a conductive metal oxide to provide the metal oxide microparticles with conductivity may be used. For example, the surfaces of microparticles of titanium oxide, zirconium oxide, cerium oxide, or the like which have a high refractive index and do not exhibit conductivity may be coated with the conductive metal oxide to provide the microparticles with conductivity.

The BET average particle diameter of the metal oxide microparticles is usually 200 nm or less, and preferably 50 nm or less in order to prevent a decrease in the transparency of the hard coating layer. If the BET average particle diameter is greater than 200 nm, the haze (turbidity) of the hard coating layer may be increased. The particle diameter may be measured by naked eye observation of a secondary electron emission photograph obtained using a scanning electron microscope (SEM) or the like, or using a particle size distribution meter utilizing dynamic light scattering, static light scattering, or the like.

The hard coating layer may be obtained by applying a coating liquid for forming the hard coating layer, and curing and drying the applied coating liquid. The coating liquid for forming the hard coating layer may be prepared by dissolving or dispersing the prepolymer, oligomer, and/or monomer containing a polymerizable unsaturated bond or an epoxy group in the molecule, which is used to form the heat-curable resin or the activated energy ray-curable resin, conductive microparticles, and additives in an appropriate organic solvent.

As examples of the organic solvent used to prepare the coating liquid, alcohols such as methanol, ethanol, isopropanol, and n-butanol; glycols such as ethylene glycol, ethylene glycol monobutyl ether, ethylene glycol monoethyl ether acetate, diethylene glycol, diethylene glycol monobutyl ether, and diacetone glycol; aromatic hydrocarbons such as toluene and xylene; aliphatic hydrocarbons such as n-hexane and n-heptane; esters such as ethyl acetate and butyl acetate; ketones such as methyl ethyl ketone and methyl isobutyl ketone; oximes such as methyl ethyl ketoxime; cellosolves such as ethyl cellosolve and butyl cellosolve; a combination of two or more of these solvents; and the like can be given.

The content of the prepolymer, oligomer, and/or monomer in the coating liquid is not particularly limited. It is preferable that the coating liquid contain the prepolymer, oligomer, and/or monomer in an amount of 5 to 95 wt% in order to obtain excellent applicability.

When the hard coating layer includes conductive microparticles, the content of the conductive microparticles in the coating liquid is not particularly limited. The content of the conductive microparticles is preferably 30 vol%, and still more preferably 40 to 70 vol% of the coating liquid. If the content of the conductive microparticles is less than 30 vol%, the antistatic properties of the resulting polarizing plate protective film may be decreased.

When curing the hard coating layer by applying ultraviolet rays, a photoinitiator or a photopolymerization promoter is added to the coating liquid. As examples of the photoinitiator, radical polymerization initiators such as an acetophenone, benzophenone, thioxanethone, benzoin, and benzoin methyl ether; cationic polymerization initiators such as an aromatic diazonium salt, aromatic sulfonium salt, aromatic iodonium salt, metallocene compound, and benzoin sulfonate; and the like can be given. These photoinitiators may be used either individually or in combination of two or more. The photoinitiator is added in an amount of usually 0.1 to 10 parts by weight for 100 parts by weight of the prepolymer, oligomer, and/or monomer containing a polymerizable unsaturated bond or an epoxy group in the molecule which is used to form the hard coating layer. n-Butylamine, triethylamine, tri-n-butylphosphine, or the like may be mixed in the coating liquid as a photosensitizer.

An organic reactive silicon compound may be added to the coating liquid. As examples of the organic reactive silicon compound, organosilicon compounds shown by the formula: RₘSi(OR')ₙ (wherein R represents a hydrogen atom or an alkyl group having 1 to 10 carbon atoms, R' represents an alkyl group having 1 to 10 carbon atoms, and m and n individually represent positive integers satisfying the relationship "m+n=4"), such as tetramethoxysilane, tetraethoxysilane, tetraisopropoxysilane, tetra-n-propoxysilane, tetra-n-butoxysilane, tetra-sec-butoxysilane, tetra-tert-butoxysilane, methyltriethoxysilane, methyltripropoxysilane, methyltributoxysilane, dimethyldimethoxysilane, dimethyldiethoxysilane, dimethylethoxysilane, dimethylmethoxysilane, dimethylpropoxysilane, dimethylbutoxysilane, methyldimethoxysilane, and methyldiethoxysilane;

silane coupling agents such as γ-(2-aminoethyl)aminopropyltrimethoxysilane, γ-(2-aminoethyl)aminopropylmethyldimethoxysilane, β-(3,4-epoxycyclohexyl)ethyltrimethoxysilane, γ-aminopropyltriethoxysilane, γ-methacryloxypropylmethoxysilane, γ-glycidoxypropyltrimethoxysilane, vinyltriacetoxysilane, γ-mercaptopropyltrimethoxysilane, γ-chloropropyltrimethoxysilane, hexamethyldisilazane, and vinyltris(β-methoxyethoxy)silane;

activated energy ray-curable silicon compounds such as a polysilane substituted with a vinyl group at one terminal, a polysilane substituted with vinyl groups at both terminals, a polysiloxane substituted with a vinyl group at one terminal, a polysiloxane substituted with vinyl groups at both terminals, and a vinyl-group-substituted polysilane or a vinyl-group-substituted polysiloxane obtained by reacting these compounds; other organosilicon compounds such as (meth)acryloxysilane compounds such as 3-(meth)acryloxypropyltrimethoxysilane and 3-(meth)acryloxypropylmethyldimethoxysilane; and the like can be given.

A leveling agent or a dispersant may be arbitrarily added to the coating liquid in order to improve the uniformity and adhesion of the coating and the like. As examples of the leveling agent, compounds which decrease surface tension such as silicone oil, fluorinated polyolefin, and polyacrylate can be given. As examples of the dispersant, a surfactant, silane coupling agent, and the like can be given.

Particles which provide antiglare properties may be arbitrarily added to the coating liquid in order to provide antiglare properties. The particles which provide antiglare properties are not particularly limited insofar as irregularities are formed on the surface of the antiglare layer. In order to effectively form irregularities on the surface of the antiglare layer, the average particle diameter of the particles which provide antiglare properties is preferably 0.5 to 10 µm, and still more preferably 1 to 7 µm.

The formation method for the hard coating layer is not particularly limited. For example, a method may be used which includes applying the coating liquid for forming the hard coating layer to the base film using a known application method, drying the applied coating liquid, and curing the dried product by heating or applying activated energy rays.
The heating temperature, the heating time, the dose and irradiation time of the activated energy rays, and the like are not particularly limited. The curing conditions may be appropriately set depending on the type of material which forms the hard coating layer.
The thickness of the hard coating layer is usually 0.5 to 30 µm, and preferably 1 to 10 µm. If the thickness of the hard coating layer is less than 0.5 µm, the hardness and the mechanical strength of the hard coating layer may be insufficient. If the thickness of the hard coating layer is greater than 30 µm, the thickness of the coating liquid may become uneven when applying the coating liquid, whereby the processability may be decreased.

The refractive index of the hard coating layer is preferably 1.53 or more, and still more preferably 1.55 or more. If the refractive index of the hard coating layer is in this range, reflection of external light can be prevented. The refractive index may be measured using a known spectroscopic ellipsometer, for example.
It is preferable that the hard coating layer have an antistatic function. In more detail, the surface resistivity of the hard coating layer is preferably 1.0×10¹⁰ ohm/square or less, and still more preferably 5.0×10⁹ ohm/square or less.
The surface resistivity may be measured using a resistivity meter.

The primer layer is formed to provide and improve adhesion between the base film and the hard coating layer or the low-refractive-index layer. As examples of the material for the primer layer, a polyesterurethane resin, polyetherurethane resin, polyisocyanate resin, polyolefin resin, resin having a hydrocarbon skeleton in the main chain, polyamide resin, acrylic resin, polyester resin, vinyl chloride-vinyl acetate copolymer, chlorinated rubber, cyclized rubber, modified products obtained by introducing a polar group into these polymers, and the like can be given. Of these, a modified product of the resin having a hydrocarbon skeleton in the main chain and a modified product of the rubber may be suitably used.

As examples of the resin having a hydrocarbon skeleton in the main chain, resins having a polybutadiene skeleton or a at least partially hydrogenated polybutadiene skeleton can be given. As specific examples of such resins, a polybutadiene resin, hydrogenated polybutadiene resin, stytene-butadiene-styrene block copolymer (SBS copolymer), hydrogenated product of the styrene-butadiene-styrene block copolymer (SEBS copolymer), and the like can be given. Of these, a modified product of the hydrogenated product of the styrene-butadiene-styrene block copolymer may be suitably used.

As the compound for introducing a polar group used to obtain the modified product of the polymer, a carboxylic acid or its derivative is preferable. As examples of the carboxylic acid and its derivative, unsaturated carboxylic acids such as acrylic acid, methacrylic acid, maleic acid, and fumaric acid; derivatives of the unsaturated carboxylic acid (e.g. halide, amide, imide, anhydride, and ester) such as maleyl chloride, maleimide, maleic anhydride, and citraconic anhydride; and the like can be given. Of these, the modified product of the unsaturated carboxylic acid or the unsaturated carboxylic anhydride may be suitably used due to excellent adhesion. As the unsaturated carboxylic acid or the unsaturated carboxylic anhydride, acrylic acid, methacrylic acid, maleic acid, and maleic anhydride are preferable, with maleic acid and maleic anhydride being still more preferable. The above unsaturated carboxylic acid and the like may be used in combination of two or more or may be modified.

The formation method for the primer layer is not particularly limited. For example, a method may be used which includes applying a coating liquid for forming the primer layer to the base film using a known application method to form the primer layer. The thickness of the primer layer is usually 0.01 to 5 µm, and preferably 0.1 to 2 µm.

An additive may be arbitrarily added to the resin materials for the base film, hard coating layer, and primer layer. The additive is not particularly limited insofar as it is generally used in a thermoplastic resin material. As examples of the additive, antioxidants such as a phenol antioxidant, phosphoric acid antioxidant, and sulfur antioxidant; UV absorbers such as a benzotriazole UV absorber, benzoate UV absorber, benzophenone UV absorber, acrylate UV absorber, and metal complex UV absorber; light stabilizers such as a hindered amine light stabilizer; coloring agents such as a dye and pigment; lubricants such as a fatty alcohol ester, polyhydric alcohol ester, fatty acid amide, and inorganic particles; plasticizers such as a triester plasticizer, phthalate plasticizer, fatty acid-base acid ester plasticizer, and oxy acid ester plasticizer; antistatic agents such as a fatty acid ester of a polyhydric alcohol; and the like can be given.

### (Low-refractive-index layer)

The low-refractive-index layer of the polarizing plate protective film according to the present invention includes a specific metal oxide complex and inorganic microparticles and has a refractive index of 1.25 to 1.37.

The metal oxide complex is formed from at least one compound selected from the group consisting of the following (a) to (c) and has an -(O-M)ₘ-O- bond (wherein M is the same as defined above, and m represents a positive integer) in the molecule.

(a) Compound shown by formula (1): MXₙ
(b) Partial hydrolysate of at least one compound shown by formula (1)
(c) Complete hydrolysate of at least one compound shown by formula (1)

In the compound (a) shown by the formula (1), M represents a metal atom or a semimetal atom.
As examples of the metal atom or the semimetal atom, alkali metals such as lithium, sodium, and potassium; alkaline earth metals such as magnesium, calcium, barium, and strontium; group 3B elements of the periodic table such as boron, aluminum, gallium, indium, and thallium; group 4B elements of the periodic table such as silicon, germanium, tin, and lead; group 5B elements of the periodic table such as phosphorus, arsenic, and antimony; transition metal elements such as scandium, titanium, vanadium, iron, nickel, copper, zinc, yttrium, zirconium, niobium, tantalum, and tungsten; lanthanoids such as lanthanum, cerium, and neodymium; and the like can be given. Of these, the group 3B elements, group 4B elements, and transition metal elements are preferable. Aluminum, silicon, titanium, and zirconium are more preferable, with silicon (Si) being still more preferable.

X represents a halogen atom such as a chlorine atom or a bromine atom; a monovalent hydrocarbon group which may have a substituent; an oxygen atom; an organic acid radical such as an acetic acid radical or a nitric acid radical; β-diketonate group such as acetylacetonate; an inorganic acid radical such as a nitric acid radical or a sulfuric acid radical; an alkoxyl group such as a methoxy group, ethoxy group, n-propoxy group, or n-butoxy group; or a hydroxyl group.
n represents the valence of M (metal atom or semimetal atom). When n is two or more, the Xs may be the same or different.

As the compound shown by the formula (1), a silicon compound shown by the formula (2): RₐSiY₄₋ₐ (wherein R represents a monovalent hydrocarbon group which may have a substituent, a represents an integer from 0 to 2, provided that, when a is two, the Rs may be the same or different, Y individually represents a hydrolyzable group) is particularly preferable.

As examples of the monovalent hydrocarbon group which may have a substituent, alkyl groups such as a methyl group, ethyl group, propyl group, butyl group, pentyl group, hexyl group, heptyl group, and octyl group; cycloalkyl groups such as a cyclopentyl group and cyclohexyl group; aryl groups which may have a substituent such as a phenyl group, 4-methylphenyl group, 1-naphthyl group, and 2-naphthyl group; alkenyl groups such as a vinyl group and allyl group; aralkyl groups such as a benzyl group, phenethyl group, and 3-phenylpropyl group; haloalkyl groups such as a chloromethyl group, γ-chloropropyl group, and 3,3,3-trifluoropropyl group; alkenylcarbonyloxyalkyl groups such as γ-methacryloxypropyl group; epoxy group-containing alkyl groups such as a γ-glycidoxypropyl group and 3,4-epoxycyclohexylethyl group; mercapto group-containing alkyl groups such as a γ-mercaptopropyl group; amino group-containing alkyl groups such as a 3-aminopropyl group; perfluoroalkyl groups such as a trifluoromethyl group; and the like can be given. Of these, the alkyl group having 1 to 4 carbon atoms, phenyl group, and perfluoroalkyl group are preferable due to easy synthesis and availability. In particular, the perfluoroalkyl group is still more preferable due to excellent stainproof properties.

Y represents a hydrolyzable group. The term "hydrolyzable group" used herein refers to a group which is hydrolyzed optionally in the presence of an acid or base catalyst to produce an -(O-Si)ₘ-O- bond.

As examples of the hydrolyzable group, alkoxy groups such as a methoxy group, ethoxy group, and propoxy group; acyloxy groups such as an acetoxy group and propionyloxy group; an oxime group (-O-N=C-R' (R")), an enoxy group (-O-C(R')=C(R")R'''), an amino group, an aminoxy group (-O-N(R')R"), an amide group (-N(R')-C(=O)-R"), and the like can be given. In the above groups, R', R", and R''' individually represent a hydrogen atom or a monovalent hydrocarbon group. As the hydrolyzable group represented by Y, the alkoxy group is preferable due to high availability.

As the silicon compound shown by the formula (2), the silicon compound in which "a" in the formula (2) represents an integer from 0 to 2 is preferable. As specific examples of such a silicon compound, an alkoxysilane, acetoxysilane, oximesilane, enoxysilane, aminosilane, aminoxysilane, amidesilane, and the like can be given. Of these, the alkoxysilane is preferable due to high availability.

As examples of the tetraalkoxysilane in which "a" in the formula (2) is "0", tetramethoxysilane, tetraethoxysilane, and the like can be given. As examples of the organotrialkoxysilane in which "a" in the formula (2) is "1", methyltrimethoxysilane, methyltriethoxysilane, methyltriisopropoxysilane, phenyltrimethoxysilane, phenyltriethoxysilane, 3,3,3-trifluoropropyltrimethoxysilane, and the like can be given. As examples of the diorganodialkoxysilane in which "a" in the formula (2) is "2", dimethyldimethoxysilane, dimethyldiethoxysilane, diphenyldimethoxysilane, diphenyldiethoxysilane, methylphenyldimethoxysilane, and the like can be given.

The molecular weight of the compound shown by the formula (1) is preferably 40 to 300, and still more preferably 100 to 200, although the molecular weight is not particularly limited.

The partial hydrolysate (b) of at least one compound shown by the formula (1) (hereinafter called "compound (3)") and the complete hydrolysate (c) of at least one compound shown by the formula (1) (hereinafter called "compound (4)") may be obtained by completely or partially hydrolyzing and condensing at least one compound shown by the formula (1).

The compound (3) and the compound (4) may be obtained by hydrolyzing a metal tetraalkoxide shown by M(Or)₄ (M is the same as defined above, and r represents a monovalent hydrocarbon group) in the presence of water in such an amount that the molar ratio "[H₂O]/[Or]" is 1 or more such as 1 to 5, and preferably 1 to 3, for example.
The hydrolysis may be effected by stirring the solution at a temperature of 5 to 100°C for 2 to 100 hours.

When hydrolyzing the compound shown by the formula (1), a catalyst may be used, as required. The catalyst used is not particularly limited. It is preferable to use an acid catalyst since the resulting partial hydrolyzate and/or hydrolysate is easily provided with a two-dimensional crosslinked structure, the condensation compound tends to become porous, and the time required for hydrolysis is reduced.

As examples of the acid catalyst, organic acids such as acetic acid, chloroacetic acid, citric acid, benzoic acid, dimethylmalonic acid, formic acid, propionic acid, glutaric acid, glycolic acid, maleic acid, malonic acid, toluenesulfonic acid, and oxalic acid; inorganic acids such as hydrochloric acid, nitric acid, and halogenated silane; acidic sol fillers such as acidic colloidal silica and titania oxide sol; and the like can be given. These acid catalysts may be used either individually or in combination of two or more.

An aqueous solution of a hydroxide of an alkali metal or an alkaline earth metal such as sodium hydroxide or calcium hydroxide or a base catalyst such as aqueous ammonia or an amine aqueous solution may be used instead of the acid catalyst.

The molecular weights of the compound (3) and the compound(4) are not particularly limited. The weight average molecular weights of the compound (3) and the compound (4) are usually 200 to 5000.

### (Inorganic microparticles)

The inorganic microparticles used in the present invention are not particularly limited insofar as the inorganic microparticles are microparticles of an inorganic compound. As the inorganic microparticles, inorganic hollow microparticles in which a cavity is formed inside the shell are preferable. It is particularly preferable to use silica-based hollow microparticles.

As the inorganic compound, an inorganic oxide is generally used. As examples of the inorganic oxide, at least one inorganic oxide such as SiO₂, Al₂O₃, B₂O₃, TiO₂, ZrO₂, SnO₂, Ce₂O₃, P₂O₅, Sb₂O₃, MoO₃, ZnO₂, and WO₃ can be given. As examples of combinations of two or more inorganic oxides, TiO₂-Al₂O₃, TiO₂-ZrO₂, In₂O₃-SnO₂, and Sb₂O₃-SnO₂ can be given. These inorganic oxides may be used either individually or in combination of two or more.

As the inorganic hollow microparticles, inorganic hollow microparticles having (A) an inorganic oxide single layer, (B) a single layer of a complex oxide formed of different inorganic oxides, or (C) a double layer formed of (A) and (B) may be used.

The hollow microparticle may have a porous shell having pores, or may be a particle in which pores are closed so that the cavity is completely enclosed by the shell.
It is preferable that the shell include a plurality of inorganic oxide coating layers formed of an inner first inorganic oxide coating layer and an outer second inorganic oxide coating layer. An inorganic hollow microparticle in which the shell is densified by closing the pores of the shell or the inner cavity is completely enclosed by the shell may be obtained by forming the outer second inorganic oxide coating layer.
In particular, when forming the second inorganic oxide coating layer using a fluorine-containing organic silicon compound, since a coating layer containing a fluorine atom is formed, the resulting particles have a lower refractive index and exhibit excellent dispersibility in an organic solvent. Moreover, the low-refractive-index layer can be provided with stainproof properties.

As examples of the fluorine-containing organic silicon compound, 3,3,3-trifluoropropyltrimethoxysilane, methyl-3,3,3-trifluoropropyldimethoxysilane, heptadecafluorodecylmethyldimethoxysilane, heptadecafluorodecyltrichlorosilane, heptadecafluorodecyltrimethoxysilane, tridecafluorooctyltrimethoxysilane, 3,3,3-trifluoropropyltriethoxysilane, and the like can be given.

The thickness of the shell is preferably 1 to 50 nm, and still more preferably 5 to 20 nm. If the thickness of the shell is less than 1 nm, the inorganic hollow microparticle may not maintain a specific particle shape. If the thickness of the shell is greater than 50 nm, the cavity in the inorganic hollow microparticle is decreased, whereby the refractive index may be insufficiently decreased. It is preferable that the thickness of the shell be 1/50 to 1/5 of the average particle diameter of the inorganic hollow microparticles.

When forming the first inorganic oxide coating layer and the second inorganic oxide coating layer as the shell, the total thickness of these layers may be set in the above range (1 to 50 nm). In particular, when forming a densified shell, the thickness of the second inorganic oxide coating layer is preferably 20 to 40 nm.

A solvent used when preparing the hollow microparticles and/or gas which enters during drying may exist in the cavity, or a precursor substance described later for forming the cavity may remain in the cavity.

The precursor substance is a porous material which remains after removing part of the component of the core particle from the core particle enclosed by the shell. As the core particle, a porous complex oxide particle formed of different inorganic oxides is used. The precursor substance may adhere to the shell and remain in only a small amount, or may account for the majority of the cavity.

The above solvent or gas may exist in the pores in the porous material. The volume of the cavity increases as the removal amount of the component of the core particle increases, whereby an inorganic hollow microparticle with a low refractive index is obtained. A transparent coating obtained by using the resulting inorganic hollow microparticles has a low refractive index and exhibits excellent antireflection properties.

The average particle diameter of the inorganic hollow microparticles is preferably 5 to 2000 nm, and still more preferably 20 to 100 nm, although the average particle diameter is not particularly limited. If the average particle diameter is less than 5 nm, the effect of decreasing the refractive index due to the hollow shape may be decreased. If the average particle diameter is greater than 2000 nm, the transparency is decreased to a large extent, whereby the effect of diffuse reflection may be increased. The average particle diameter used herein is the number average particle diameter measured using a transmission electron microscope.

The method of manufacturing the inorganic hollow microparticles as described above is disclosed in detail in JP-A-2001-233611, for example. The inorganic hollow microparticles used in the present invention may be manufactured based on the method disclosed in JP-A-2001-233611. Or, commercially available inorganic hollow microparticles may also be used.

The inorganic microparticles are preferably used in an amount of 10 to 30 wt% of the entire low-refractive-index layer, although the amount is not particularly limited. If the amount of the inorganic microparticles is in this range, a polarizing plate protective film exhibiting a low refractive index and excellent scratch resistance can be obtained.

The inorganic microparticles may be used in the form of a liquid dispersion. As examples of the organic solvent used for the liquid dispersion, lower aliphatic alcohols such as methanol, ethanol, isopropanol (IPA), n-butanol, and isobutanol; ethylene glycol derivatives such as ethylene glycol, ethylene glycol monobutyl ether, and ethylene glycol monoethyl ether acetate; diethylene glycol derivatives such as diethylene glycol and diethylene glycol monobutyl ether; diacetone alcohol; aromatic hydrocarbons such as toluene and xylene; aliphatic hydrocarbons such as n-hexane and n-heptane; esters such as ethyl acetate and butyl acetate; ketones such as acetone, methyl ethyl ketone, and methyl isobutyl ketone; and the like can be given.
These organic solvents may be used either individually or in combination of two or more.

The low-refractive-index layer may be formed by applying a composition including the metal oxide complex selected from the group consisting of (a) to (c) and at least one type of inorganic microparticles (hereinafter may be called "coating composition") to the base film, and optionally drying and heating the applied composition.

Since the coating composition is applied to the surface of the base film to form a coating, and there may be a case where it is preferable that the matrix forming material be at least partially hydrolyzed, it is preferable that the coating composition include water or a mixture of water and an organic solvent.

As examples of the organic solvent used in the coating composition, hydrophilic organic solvents such as lower aliphatic alcohols such as methanol, ethanol, isopropanol (IPA), n-butanol, and isobutanol; ethylene glycol derivatives such as ethylene glycol, ethylene glycol monobutyl ether, and ethylene glycol monoethyl ether acetate; diethylene glycol derivatives such as diethylene glycol and diethylene glycol monobutyl ether; diacetone alcohol; and a combination of two or more of these solvents can be given.

Aromatic hydrocarbons such as toluene and xylene; aliphatic hydrocarbons such as n-hexane and n-heptane; esters such as ethyl acetate and butyl acetate; ketones such as methyl ethyl ketone and methyl isobutyl ketone; oximes such as methyl ethyl ketoxime; a combination of two or more of these solvents; or the like may be used in addition to the hydrophilic organic solvent.

When the coating composition includes the compounds (a) and (b), it is preferable that the coating composition include a curing catalyst. In this case, when applying the coating composition to the surface of the base film to form a coating and drying the coating, the condensation reaction is promoted to increase the crosslink density of the coating, whereby the water resistance and the alkali resistance of the coating can be improved.

As examples of the curing catalyst, metal chelate compounds such as a Ti chelate compound and Zr chelate compound; organic acids; and the like can be given.

The coating composition may further include a knowri silane coupling agent. When the coating composition includes the silane coupling agent, the adhesion between the base film and the low-refractive-index layer may be improved when forming the low-refractive-index layer on the base film using the coating composition.

The method of applying the coating composition to the base film is not particularly limited. A known coating method may be used. As examples of the coating method, wire bar coating, dipping, spraying, spin coating, roll coating, and the like can be given.

The coating composition is applied at a temperature of usually 10 to 40°C, and preferably 20 to 30°C and a relative humidity of usually 10 to 80%, and preferably 40 to 70%.

When applying the coating composition to the base film to form a coating and then drying the coating, it is preferable to dry the coating at a temperature of 20 to 130°C and a relative humidity of 0 to 80%. It is still more preferable to dry the coating at a temperature of 20 to 80°C and a relative humidity of 0 to 80% until the amount of the solvent remaining in the coating layer becomes 5 wt%, and dry the coating at a temperature of 80 to 130°C and a relative humidity of 0 to 20% after the amount of the solvent remaining in the coating layer has become less than 5 wt%.
The thickness of the resulting low-refractive-index layer is usually 10 to 1000 nm, and preferably 50 to 500 nm.

The refractive index of the low-refractive-index layer is 1.25 to 1.37, preferably 1.25 to 1.36, and particularly preferably 1.25 to 1.35.
If the refractive index of the low-refractive-index layer is less than 1.25, the strength of the low-refractive-index layer may be low, whereby the scratch resistance required for the polarizing plate protective film may not be obtained. If the refractive index of the low-refractive-index layer is greater than 1.37, desired antireflection effects may not be obtained.
The refractive index may be measured using a known spectroscopic ellipsometer, for example.

The reflectance of the low-refractive-index layer is usually 0.5% or less, and preferably 0.3%. The reflectance may be determined as the reflectance at a wavelength of 550 nm by measuring a reflection spectrum at a specific incident angle using a known spectrophotometer, for example.

In the polarizing plate protective film according to the present invention, a stainproof layer may be formed on the low-refractive-index layer in order to protect the low-refractive-index layer and increase the stainproof properties.

The material for forming the stainproof layer is not particularly limited insofar as the function of the low-refractive-index layer is not hindered and the performance required for the stainproof layer is satisfied. A compound having a hydrophobic group may be preferably used. As specific examples of the compound having a hydrophobic group, a perfluoroalkylsilane compound, perfluoropolyether silane compound, and fluorine-containing silicone compound can be given. As the formation method for the stainproof layer, physical vapor deposition such as deposition or sputtering; chemical vapor deposition such as CVD; wet coating; or the like may be used. The thickness of the stainproof layer is preferably 20 nm or less, and still more preferably 1 to 10 nm, although the thickness is not particularly limited.

The polarizing plate protective film according to the present invention preferably has a warping rate of 1% or less when formed into a film with an average thickness of 50 µm and dimensions of 100x100 mm and allowed to stand in an atmosphere at a temperature of 60°C and a humidity of 95% for 500 hours. When using such a polarizing plate protective film, since the warping rate of the polarizing plate protective film is as small as 1% or less even when allowed to stand at a high humidity and a high temperature for a long time, the polarizing plate protective film exhibits excellent adhesion between the base film and the low-refractive-index layer and processability when bonded to another film.

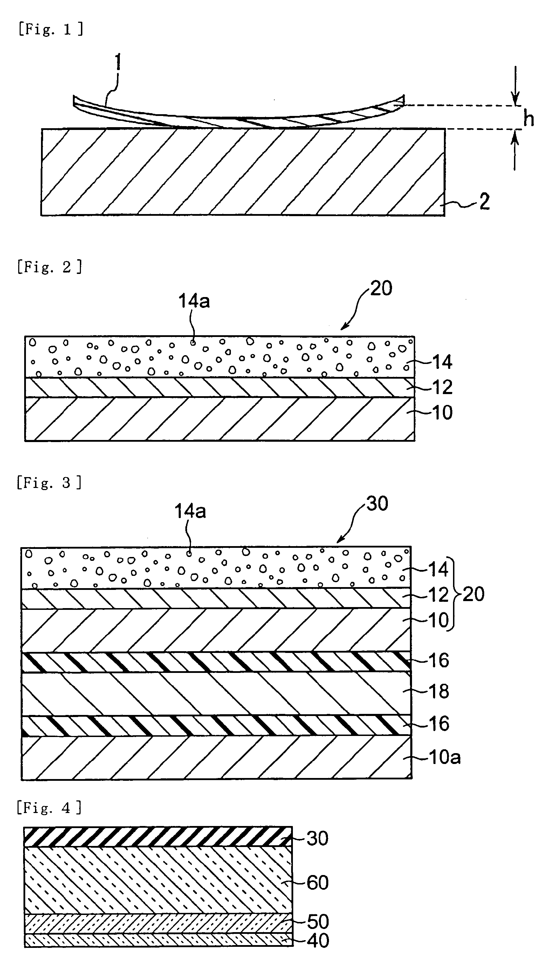

The warping rate may be calculated as follows. A polarizing plate protective film 1 according to the present invention is cut to an average thickness of 50 µm and dimensions of 100×100 mm. The polarizing plate protective film 1 is then allowed to stand in an atmosphere at a temperature of 60°C and a humidity of 95% for 500 hours. As shown in FIG. 1, the polarizing plate protective film 1 after the test is placed on a horizontal platen 2. The distance h (nm) between the surface of the platen and the lower side of the polarizing plate protective film 1 positioned at the greatest distance from the surface of the platen is measured using calipers, and the ratio of the distance h to the length (100 mm) of the polarizing plate protective film is calculated as the warping rate (%). Specifically, the warping rate (%) is calculated by "warping rate (%) = h/100×100". When allowing the polarizing plate protective film 1 to stand in an atmosphere at a temperature of 60°C and a humidity of 95% for 500 hours, the polarizing plate protective film 1 may be deformed concavely or convexly. In both cases, the polarizing plate protective film 1 after the test is placed on a horizontal platen 2 as shown in FIG. 1, and the distance (h) is measured in this state.

Since the polarizing plate protective film according to the present invention exhibits excellent scratch resistance, the polarizing plate protective film is particularly useful as a polarizing plate protective film of a liquid crystal display device for which scratch resistance is required.
When the polarizing plate protective film according to the present invention is subjected to a test (steel wool test) in which the surface of the polarizing plate protective film is rubbed with steel wool ten times in a state in which the load of 0.025 MPa is applied to the steel wool, occurrence of scratches is not observed on the surface of the film by naked eye observation.

The polarizing plate protective film according to the present invention shows only a small change in total light transmittance before and after the steel wool test. When the total light transmittance change rate is defined as "total light transmittance change rate (%) = (amount of change in total light transmittance before and after test) / (total light transmittance before test) x 100", the polarizing plate protective film according to the present invention preferably has a total light transmittance change rate of 1% or less.

The polarizing plate protective film according to the present invention shows only a small change in haze before and after the steel wool test. When the haze change rate is defined as "haze change rate (%) = (amount of change in haze before and after test) / (haze before test) × 100", the polarizing plate protective film according to the present invention preferably has a haze change rate of 15% or less.

FIG. 2 shows a layer configuration example of the polarizing plate protective film according to the present invention. A polarizing plate protective film 20 shown in FIG. 2 includes a hard coating layer 12 formed on a base film 10, in which a low-refractive-index layer 14 including hollow microparticles 14a is stacked on the hard coating layer 12. The polarizing plate protective film according to the present invention is not limited to the polarizing plate protective film shown in FIG. 2. It suffices that the polarizing plate protective film according to the present invention include at least the low-refractive-index layer on the base film. For example, the polarizing plate protective film according to the present invention may have a configuration in which the low-refractive-index layer is directly formed on the base film.

The polarizing plate protective film according to the present invention is useful as a polarizing plate protective film for a liquid crystal display device such as a portable telephone, digital information terminal, Pocket Bell (registered trademark), navigation system, onboard liquid crystal display, liquid crystal monitor, modulated light panel, display for office automation (OA) instruments, and display for audio-visual (AV) instruments; a touch panel; and the like.

### 3) Reflection preventive polarizing plate

The reflection preventive polarizing plate according to the present invention includes the polarizing plate protective film according to the present invention as a protective film on the observation side.

The polarizing plate is not particularly limited insofar as it has the polarizing plate function. As examples of the polarizing plate, polarizing plates formed of polyvinyl alcohol (PVA) and polyene can be given.

The method of manufacturing the polarizing plate is not particularly limited. As the method of manufacturing a PVA polarizing plate, a method including causing an iodine ion to be adsorbed on a PVA film and uniaxially stretching the PVA film, a method including uniaxially stretching a PVA film and causing an iodine ion to be adsorbed on the PVA film, a method including causing an iodine ion to be adsorbed on a PVA film while uniaxially stretching the PVA film, a method including dyeing a PVA film with a dichroic dye and uniaxially stretching the PVA film, a method including uniaxially stretching a PVA film and dyeing the PVA film with a dichroic dye, and a method including dyeing a PVA film with a dichroic dye while uniaxially stretching the PVA film can be given. As the method of manufacturing a polyene polarizing plate, known methods such as a method including uniaxially stretching a PVA film and heating/dehydrating the PVA film in the presence of a dehydration catalyst, and a method including uniaxially stretching a polyvinyl chloride film and heating/dehydrating the polyvinyl chloride film in the presence of a hydrochloric acid removal catalyst can be given.

The reflection preventive polarizing plate according to the present invention may be manufactured by stacking a polarizing plate on the surface of the base film of the polarizing plate protective film according to the present invention on the side on which the low-refractive-index layer is not formed.

The polarizing plate protective film and the polarizing plate may be stacked by using an arbitrary bonding means such as an adhesive or a pressure-sensitive adhesive. As examples of the adhesive or a pressure-sensitive adhesive, acrylic, silicone, polyester, polyurethane, polyether, or rubber adhesive or pressure-sensitive adhesive can be given. Of these, the acrylic adhesive or pressure-sensitive adhesive is preferable from the point of view of heat resistance, transparency, and the like.

In the reflection preventive polarizing plate according to the present invention, a protective film may be stacked on the surface of the polarizing plate on the side on which the polarizing plate protective film according to the present invention is not stacked through an adhesive or a pressure-sensitive adhesive layer. As the protective film, a protective film formed of a material exhibiting low optical anisotropy is preferable. The material exhibiting low optical anisotropy is not particularly limited. As examples of the material exhibiting low optical anisotropy, cellulose esters such as triacetyl cellulose, alicyclic structure-containing polymer resins, and the like can be given. Of these, the alicyclic structure-containing polymer resins are preferable due to excellent transparency, low birefringence, dimensional stability, and the like. As examples of the alicyclic structure-containing polymer resin, the alicyclic structure-containing polymer resins given as examples for the base film can be given. As examples of the adhesive or pressure-sensitive adhesive, an adhesive or a pressure-sensitive adhesive similar to those used to stack the polarizing plate protective film and the polarizing plate can be given.

FIG. 3 is a cross-sectional view showing the layer configuration of the reflection preventive polarizing plate according to the present invention. A reflection preventive polarizing plate 30 shown in FIG. 3 has a structure in which a polarizing plate 18 is stacked on the polarizing plate protective film 20 according to the present invention through an adhesive or pressure-sensitive adhesive layer 16 on the side on which the low-refractive-index layer 14 is not formed, and a protective film 10a is stacked on the polarizing plate 18 through an adhesive or pressure-sensitive adhesive layer 16 on the observation side.

Since the reflection preventive polarizing plate according to the present invention includes the polarizing plate protective film according to the present invention, the reflection preventive polarizing plate rarely undergoes warping, deformation, or the like even when allowed to stand at a high temperature and a high humidity for a long time. Moreover, since the reflection preventive polarizing plate according to the present invention exhibits excellent layer-to-layer adhesion, interlayer separation or the like does not occur even when the reflection preventive polarizing plate is allowed to stand at a high temperature and a high humidity for a long time.

### 4) Optical product

The optical product according to the present invention includes the reflection preventive polarizing plate according to the present invention. As preferable examples of the optical product according to the present invention, a liquid crystal display device, a touch panel, and the like can be given.

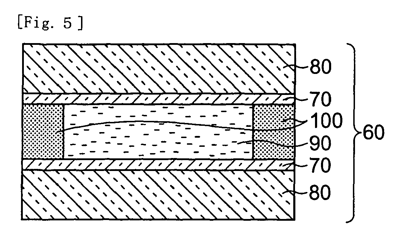

FIG. 4 shows a layer configuration example of a liquid crystal display device including the reflection preventive polarizing plate according to the present invention as an example of an optical product including the reflection preventive polarizing plate according to the present invention. The liquid crystal display device shown in FIG. 4 includes a polarizing plate 40, a retardation plate 50, s liquid crystal cell 60, and the reflection preventive polarizing plate 30 according to the present invention. The reflection preventive polarizing plate 30 is bonded to the liquid crystal cell 60 at the surface of the polarizing plate through an adhesive or pressure-sensitive adhesive layer (not shown). As shown in FIG. 5, the liquid crystal cell 60 is formed by disposing electrode substrates 80, each having a transparent electrode 70, at a specific interval in a state in which the transparent electrodes 70 face each other, and sealing a liquid crystal 90 between the transparent electrodes 70, for example. In FIG. 5, a reference numeral 100 indicates a seal.

The liquid crystal mode of the liquid crystal 90 is not particularly limited. As examples of the liquid crystal mode, twisted nematic (TN), super twisted nematic (STN), in-plane switching (IPS), vertical alignment (VA), multi-domain vertical alignment (MVA), hybrid aligned nematic (HAN), optical compensated bend (OCB), and the like can be given.

The liquid crystal display device shown in FIG. 4 may be used in a normally white mode in which a bright display occurs at a high applied voltage and a dark display occurs at a low applied voltage and a normally black mode in which a dark display occurs at a high applied voltage and a bright display occurs at a low applied voltage.

The optical product according to the present invention includes the reflection preventive polarizing plate according to the present invention which does not undergo deformation and stress during use at a high temperature and a high humidity and exhibits excellent durability. Therefore, the optical product according to the present invention does not show color omission at the edge of a display panel, a variation in hue in a display panel, or the like even when used at a high temperature and a high humidity for a long time.

### EXAMPLES

The present invention is described below in more detail by way of examples. Note that the present invention is not limited to the following examples.

### (1) Refractive index

The refractive index was calculated from the values measured using a high-speed spectroscopic ellipsometer ("M-2000U" manufactured by J. A. Woollam) at a measurement wavelength of 245 to 1000 nm and an incident angle of 55°, 60°, and 65°.

### (2) Reflectance

The reflection spectrum was measured using a spectro-photometer (UV-visible-near-infrared spectro-photometer "V-570" manufactured by JASCO Corporation) at an incident angle of 5°, and the reflectance at a wavelength of 550 nm was calculated.

### (3) Scratch resistance

### Steel wool test

The surface of the polarizing plate protective film was rubbed with steel wool #0000 ten times in a state in which the load of 0.025 MPa was applied to the steel wool (hereinafter called "steel wool test"). The following items (i) and (ii) were evaluated.
(i) Outward appearance of film after steel wool test
The condition of the surface of the film after the steel wool test was observed with the naked eye and evaluated according to the following criteria.
Excellent: No scratches were observed.
Good: Small scratches were found upon careful observation.
Bad: Scratches were observed.

(ii) Change in total light transmittance and haze before and behind steel wool test (in accordance with ASTM D1003)
The changes in total light transmittance and haze were determined in accordance with ASTM D1003 using a turbidimeter "NDH-300A" (manufactured by Nippon Denshoku Industries Co., Ltd.). The number of samples was five.

### (4) Warping rate (deformation) of polarizing plate protective film

As shown in FIG. 1, a sample (100×100 mm) which had been allowed to stand at 60°C and 95 RH% for 500 hours was placed on a horizontal platen so that the center of the sample was convex downward. The distance h (nm) between the surface of the platen and the lower side of the sample positioned at the greatest distance from the surface of the platen was measured using calipers, and the ratio of the distance h to the length of the sample was calculated as the warping rate (%). Specifically, the warping rate (%) was calculated by "warping rate (%) = h/100×100". The warping rate was indicated by a positive value when the sample was convex toward the film formation side, and the warping rate was indicated by a positive value when the sample was concave toward the film formation side.

100 parts by weight of a norbornene polymer (hydrogenated product of ring-opening copolymer of norbornene monomers, "ZEONOR 1430" manufactured by Zeon Corporation, glass transition temperature (Tg) = 145°C) was mixed with 0.2 parts by weight of a phenol aging preventive (pentaerythrityl-tetrakis [3-(3,5-di-tertiarybutyl-4-hydroxyphenyl)propionate]). The mixture was kneaded using a biaxial mixer, and the resulting strand (rod-like molten resin) was cut using a strand cutter to obtain a pellet-shaped (particulate) molding material.

The resulting pellets were dried at 110°C for four hours using a hot air dryer in which air was circulated. Using a T-die film melt extrusion molding machine having a resin melt kneader equipped with a screw with a diameter of 65 mm that provided with a leaf disk polymer filter (filtration accuracy: 30 µm), the dried pellets were extruded using a T-shaped die with a width of 350 mm, in which chrome plating with a surface roughness Ra of 0.15 µm was provided on the inner surface, at a molten resin temperature of 260°C and a die temperature of 260°C. The extruded sheet-shaped norbornene polymer was caused to adhere to a first cooling drum (diameter: 250 mm, temperature: 135°C, circumferential speed R₁: 10.05 m/min), and then transferred to a second cooling drum (diameter: 250 mm, temperature: 125°C, circumferential speed R₂: 10.05 m/min) and a third cooling drum (diameter: 250 mm, temperature: 100°C, circumferential speed R₃: 9.98 m/min) while causing the polymer to adhere to the drum to obtain a base film 1A with a length of 300 m and a thickness of 40 µm). The resulting long base film 1A was wound in the shape of a roll. The base film 1A had a volatile content of 0.01 wt% or less and a saturated water absorption of 0.01 wt% or less.

### (Preparation of hard coating material 1)

30 parts of a hexafunctional urethane acrylate oligomer ("NK Oligo U-6HA" manufactured by Shin-Nakamura Chemical Co., Ltd.), 40 parts of butyl acrylate, 30 parts of isobornyl methacrylate ("NK Ester IB" manufactured by Shin-Nakamura Chemical Co., Ltd.), and 10 parts of 2,2-dimethoxy-1,2-diphenylethan-1-one were mixed using a homogenizer to prepare a hard coating material 1 which is UV-curable resin composition.

### (Preparation of hard coating material 2)

100 parts by weight of an antimony pentoxide modified alcohol sol (manufactured by Catalysts & Chemicals Industries Co., Ltd., solid content: 30 wt%), 10 parts by weight of UV-curable urethane acrylate ("UV7000B" manufactured by Nippon Synthetic Chemical Industry Co., Ltd.), and 0.4 parts by weight of a photoinitiator ("Irgacure 184" manufactured by Ciba Specialty Chemicals Inc.) were mixed to prepare a UV-curable hard coating material 2.

### (Production Example 1) Production of hard coating layer stacked film 2A

The upper and lower sides of the base film 1A were subjected to a corona discharge treatment for three seconds using a high frequency transmitter (corona generator "HV05-2" manufactured by Tantec) at an output voltage of 100%, a power of 250 W, an electrode length of 240 mm (wire electrode with a diameter of 1.2 mm), and a work electrode interval of 1.5 mm to modify the base film 1A so that the surface tension was 0.072 N/m. The hard coating material 1 was continuously applied to the base film 1A using a die coater so that the thickness of the hard coating layer after curing was 5 µm. After drying the applied hard coating material 1 at 80°C for five minutes, the hard coating material was cured by applying ultraviolet rays (dose: 300 mJ/cm²) to obtain a hard coating layer stacked film 2A.

### (Production Example 2) Production of hard coating layer stacked film 2B

A hard coating layer stacked film 2B was obtained in the same manner as in Production Example 1 except for using a triacetyl cellulose (TAC) film with a thickness of 40 µm (base film 1B, "KC4UX2M" manufactured by Konica Minolta, Tg=120°C, saturated water absorption=4.5 wt%, volatile content=6.0 wt%).

### (Production Example 3) Production of hard coating layer stacked film 2C

A hard coating layer stacked film 2C was obtained in the same manner as in Production Example 1 except for using a polyethylene terephthalate film with a thickness of 40 µm (base film 1C, "Lumirror T60" manufactured by Toray Industries Inc.).

### (Production Example 4) Preparation of coating composition 1

A tetramethoxysilane oligomer ("Methyl Silicate 51" manufactured by Colcoat Co., Ltd.), methanol, water, and a 0.01N hydrochloric acid solution were mixed at a weight ratio of 21:36:2:2. The mixture was stirred at 25°C for two hours in a high-humidity bath to obtain a silicone resin with a weight average molecular weight of 850. A hollow silica isopropanol dispersion sol (manufactured by Catalysts & Chemicals Industries Co., Ltd., solid content: 20 wt%, average primary particle diameter: about 35 nm, shell thickness: about 8 nm) was added to the silicone resin as hollow silica microparticles so that the weight ratio of "hollow silica microparticle/silicone resin (converted into condensation compound)" was 7:3 (solid content). The mixture was diluted with methanol so that the total solid content was 1 wt% to obtain a coating composition 1.

### (Production Example 5) Preparation of coating composition 2

A coating composition 2 was prepared in the same manner as in the preparation of the coating composition 1 except that the hollow silica isopropanol dispersion sol was added so that the weight ratio of "hollow silica microparticle/silicone resin (converted into condensation compound)" was 8:2 (solid content) and silica methanol ("PMA-ST" manufactured by Nissan Chemical Industries, Ltd., and average particle diameter: 10 to 20 nm) was added as silica microparticles in which a cavity is not formed inside the shell in an amount of 5% (SiO₂ conversion solid content) of the total solid content of the coating composition.

### (Production Example 6) Preparation of silicon alkoxide solution 1

A tetramethoxysilane oligomer ("Methyl Silicate 51" manufactured by Colcoat Co., Ltd.) and methanol were mixed at a weight ratio of 47:71 to prepare a liquid A. Water, aqueous ammonia (28 wt%), and methanol were mixed at a weight ratio of 60:1.2:97.2 to prepare a liquid B. The liquid A and the liquid B were mixed at a ratio of 16:17 to prepare a silicon alkoxide solution 1.

### (Production Example 7) Preparation of silicon alkoxide solution 2

A silicon alkoxide solution 2 was prepared in the same manner as in Production Example 6 except for mixing the tetramethoxysilane oligomer and methanol at a weight ratio of 47:79 when preparing the liquid A.

### (Example 1)

After allowing the coating composition 1 obtained in Production Example 4 to stand for one hour after the preparation, the composition 1 was applied to the hard coating layer stacked film 2A using a wire bar coater to form a coating with a thickness of about 100 nm. After allowing the coating to dry for one hour, the coating was heated at 120°C for 10 minutes in air to obtain a polarizing plate protective film 3 A on which the cured coating was formed.

### (Example 2)

A polarizing plate protective film 3B on which a cured coating was formed was obtained in the same manner as in Example 1 except for using the coating composition 2 obtained in Production Example 5.

### (Example 3)

A polarizing plate protective film 3C on which a cured coating was formed was obtained in the same manner as in Example 2 except for using the hard coat stacked film 2B obtained in Production Example 2.

### (Example 4)

A polarizing plate protective film 3D on which a cured coating was formed was obtained in the same manner as in Example 2 except for using the hard coat stacked film 2C obtained in Production Example 3.
(Example 5)
A polarizing plate protective film 3E on which a cured coating was formed was obtained in the same manner as in Example 1 except for using the hard coating material 2 instead of the hard coating material 1.

### (Comparative Example 1)

The silicon alkoxide solution 1 obtained in Production Example 6 was applied dropwise to the hard coating layer stacked film 2B obtained in Production Example 2 to effect spin coating at a timing of one minute elapsed after starting mixing. A methanol atmosphere was provided in the rotation chamber of a spin coater. The film was rotated at 700 rpm for 10 seconds. After coating, the applied solution was allowed to stand for 1 minute 15 seconds to obtain a thin film in which the silicon alkoxide gelled.
The gel thin film was immersed in a solution prepared by mixing water, 28% aqueous ammonia, and methanol at a weight ratio of 162:4:640 for five minutes, and then allowed to stand overnight at room temperature. The thin film was then immersed in a 10% isopropanol solution of hexamethyldisilazane to effect hydrophobization.
The hydrophobized gel compound was washed by immersing the compound in isopropanol. After placing the compound in a pressure vessel, the vessel was filled with liquefied carbon dioxide. The compound was supercritically dried at 80°C and 16 MPa for two hours to obtain a polarizing plate protective film 3F in which the silica aerogel thin film with a thickness of 100 nm was formed on the surface.

### (Comparative Example 2)

A polarizing plate protective film 3G was obtained in the same manner as in Comparative Example 1 except for using the silicon alkoxide solution 2 obtained in Production Example 7 when forming the low-refractive-index layer.

The refractive indices of the low-refractive-index layer and the hard coating layer, the reflectance, the outward appearance of the film after the steel wool test, the total light transmittance and the haze before and after the steel wool test, and the warping rate (%) were measured using the polarizing plate protective films 3A to 3E of Examples 1 to 5 and the polarizing plate protective films 3F and 3G of Comparative Examples 1 and 2. The measurement results for the polarizing plate protective films 3A to 3G are summarized in Table 1.

**[Table 1]**

| | Polarizing plate protective film | Refractive index of hard coating layer | Refractive index of low-refractive-index layer | Reflectance | Outward appearance of film after steel wool test | Before steel wool test | | After steel wool test | | Warping rate (%) |
|---|---|---|---|---|---|---|---|---|---|---|
| | | | | | | Total light transmittance (%) | Haze (%) | Total light transmittance (%) | Haze (%) | |
| Example 1 | 3A | 1.53 | 1.28 | 0.2 | Excellent | 95.5 | 0.47 | 95.0 | 0.52 | 0.6 |
| Example 2 | 3B | 1.53 | 1.25 | 0.2 | Excellent | 96.2 | 0.51 | 95.3 | 0.55 | 0.5 |
| Example 3 | 3C | 1.53 | 1.25 | 0.3 | Good | 94.9 | 0.55 | 94.4 | 0.58 | 0.9 |
| Example 4 | 3D | 1.53 | 1.25 | 0.2 | Good | 95.7 | 0.49 | 94.9 | 0.53 | 1.0 |
| Example 5 | 3E | 1.62 | 1.28 | 0.2 | Excellent | 95.5 | 0.50 | 94.8 | 0.53 | 0.6 |
| Comparative Example 1 | 3F | 1.53 | 1.23 | 0.2 | Bad | 94.6 | 0.38 | 93.3 | 5.38 | 0.6 |
| Comparative Example 2 | 3G | 1.53 | 1.40 | 1.5 | Good | 94.4 | 0.32 | 94.3 | 0.40 | 0.7 |

As shown in Table 1, the polarizing plate protective films 3A to 3E of Examples 1 to 5 showed a low refractive index of the low-refractive-index layer and exhibited a low reflectance. This suggests that the polarizing plate protective films 3A to 3E are useful as an optical film having an antireflection function.
In the polarizing plate protective films 3A to 3E of Examples 1 to 5, no scratches were observed on the surface with the naked eye after the steel wool test. Moreover, the changes in total light transmittance and haze before and after the steel wool test were small. Specifically, the polarizing plate protective films 3A to 3E exhibited excellent scratch resistance.
The polarizing plate protective films 3A to 3E of Examples 1 to 5 also exhibited a small warping rate.

The polarizing plate protective film 3F of Comparative Example 1 showed a low refractive index of the low-refractive-index layer and exhibited a low reflectance. However, since the polarizing plate protective film 3F exhibited poor scratch resistance, the haze value was increased after the steel wool test.
The polarizing plate protective film 3G of Comparative Example 2 showed small changes in total light transmittance and haze before and after the steel wool test to exhibit excellent scratch resistance. However, since the refractive index of the low-refractive-index layer and the reflectance were high, the polarizing plate protective film 3G exhibited a poor antireflection function.

### (Examples 6 to 10 and Comparative Examples 3 and 4) Production of liquid crystal display element

### (1) Production of reflection preventive polarizing plate

A polyvinyl alcohol film with a degree of polymerization of 2400 and a thickness of 75 µm was immersed in a dyebath (40°C) containing iodine and potassium iodide. The film was then stretched at a total stretch rate of 5.3 and crosslinked in an acidic bath (60°C) containing boric acid and potassium iodide. After washing the film with water, the film was dried at 40°C to obtain a polarizing plate with a thickness of 28 µm.

The polarizing plate was bonded to the polarizing plate protective film 3A obtained in Example 1 on the side of the base film 1A through an acrylic adhesive ("DP-8005 Clear" manufactured by Sumitomo 3M), and the surface-modified base film 1A was bonded to the other side of the polarizing plate through the acrylic adhesive to obtain a reflection preventive polarizing plate 4A having a layer configuration similar to that shown in FIG. 3. Reflection preventive polarizing plates 4B to 4G were obtained in the same manner as described above using the polarizing plate protective films 3B to 3G, respectively.

### (2) Production of liquid crystal display element

A liquid crystal display cell using a plastic cell substrate (3 inches, thickness of plastic substrate: 400 µm) was provided. The front side of the liquid crystal display cell was bonded to each of the reflection preventive polarizing plates 4A to 4G on the side of the polarizing plate. Another polarizing plate (rear) was bonded to the opposite side of the liquid crystal display cell to obtain a liquid crystal display element. The liquid crystal display element was allowed to stand at 60°C and 95%RH for 500 hours, and placed on a backlight (33,000 lux). The presence or absence of color omission at the edge of the liquid crystal display cell and a variation in hue in the panel plane were observed with the naked eye. A case where leakage of light near the panel edge was not observed and a uniform black display was obtained was evaluated as "Excellent", a case where leakage of light was observed to some extent near the panel edge was evaluated as "Fair", and a case where leakage of light was observed at a position (panel plane) apart from the panel edge and a variation in hue was observed was evaluated as "Bad". The evaluation results are shown in Table 2.

**[Table 2]**

| | Reflection preventive polarizing plate | Base film stacked on lower side of polarizing plate | Display performance |
|---|---|---|---|
| Example 6 | 4A | 1A | Excellent |
| Example 7 | 4B | 1A | Excellent |
| Example 8 | 4C | 1B | Excellent |
| Example 9 | 4D | 1C | Excellent |
| Example 10 | 4E | 1A | Excellent |
| Comparative Example 3 | 4F | 1B | Fair |
| Comparative Example 4 | 4G | 1B | Fair |

As shown in Table 2, the liquid crystal display elements of Examples 6 to 10 did not show deterioration of the display performance even when allowed to stand at a high temperature and a high humidity for a long time. On the other hand, the liquid crystal display elements of Comparative Examples 3 and 4 showed deterioration of the display performance when allowed to stand at a high temperature and a high humidity for a long time.

### INDUSTRIAL APPLICABILITY

The polarizing plate protective film according to the present invention includes the low-refractive-index layer effective as an antireflective layer and exhibits scratch resistance sufficient for a protective film for a polarizing plate. The polarizing plate protective film according to the present invention shows only a small amount of warping (deformation) which may cause a problem when bonded to a polarizing plate.
Since the reflection preventive polarizing plate according to the present invention includes the protective film according to the present invention as at least one protective film for the polarizing film, the reflection preventive polarizing plate according to the present invention exhibits an excellent antireflection function and excellent scratch resistance. Moreover, the reflection preventive polarizing plate according to the present invention shows only a small amount of warping (deformation) which may cause a problem when bonding a protective film and a polarizing plate.
Since the reflection preventive polarizing plate according to the present invention includes the polarizing plate protective film according to the present invention, the reflection preventive polarizing plate rarely undergoes warping, deformation, or the like even when allowed to stand at a high temperature and a high humidity for a long time.

## Claims

1. A polarizing plate protective film comprising a base film and a low-refractive-index layer formed on the base film, the low-refractive-index layer including a metal oxide complex and inorganic microparticles and having a refractive index of 1.25 to 1.37, the metal oxide complex being formed from at least one compound selected from the group consisting of a compound shown by the following formula (1): MXₙ (wherein M represents a metal atom or a semimetal atom, X represents a halogen atom, a monovalent hydrocarbon group which may have a substituent, an oxygen atom, an organic acid radical, a β-diketonate group, an inorganic acid radical, an alkoxy group, or a hydroxyl group, and n represents the valence of M, provided that, when n is 2 or more, the Xs may be the same or different), a partial hydrolysate of at least one compound shown by the formula (1), and a complete hydrolysate of at least one compound shown by the formula (1), and having an -(O-M)ₘ-O- bond (wherein M is the same as defined above, and m represents a positive integer) in the molecule.

2. The polarizing plate protective film according to claim 1, wherein the inorganic microparticle is a hollow microparticle of an inorganic compound.

3. The polarizing plate protective film according to claim 1 or 2, wherein M is Si.

4. The polarizing plate protective film according to any of claims 1 to 3, comprising a hard coating layer between the base film and the low-refractive-index layer.

5. The polarizing plate protective film according to claim 4, wherein the hard coating layer includes an activated energy ray-curable resin or a heat-curable resin.

6. The polarizing plate protective film according to claim 4, wherein the hard coating layer has a refractive index of 1.53 or more.

7. The polarizing plate protective film according to claim 4, wherein the hard coating layer further includes conductive microparticles.

8. The polarizing plate protective film according to any of claims 1 to 7, wherein the base film includes an alicyclic structure-containing polymer resin.

9. A reflection preventive polarizing plate comprising the polarizing plate protective film according to any of claims 1 to 7 as an observation-side protective film for the polarizing plate.

10. An optical product comprising the reflection preventive polarizing plate according to claim 9.
